# EUROPÄISCHE PATENTSCHRIFT

(11) **EP 1 996 469 B1**
(45) Veröffentlichungstag und Bekanntmachung des Hinweises auf die Patenterteilung: **02.05.2012**
(21) Anmeldenummer: 07723271.8
(22) Anmeldetag: 15.03.2007
(51) Int. Cl.: B65B 19/10

(54) **VORRICHTUNG ZUM FÖRDERN VON ZIGARETTEN-GRUPPEN ODER ANDEREN GEGENSTÄNDEN**
APPARATUS FOR CONVEYING CIGARETTE GROUPS OR OTHER OBJECTS
DISPOSITIF POUR TRANSPORTER DES GROUPES DE CIGARETTES OU D'AUTRES OBJETS

(30) Priorität: 20.03.2006 DE 102006013038
(43) Veröffentlichungstag der Anmeldung: 03.12.2008
(60) Teilanmeldung: 09010785.5
(73) Patentinhaber: Focke & Co. (GmbH & Co. KG), 27283 Verden (DE)
(72) Erfinder: BRETTHAUER, Hans-J., 28201 Bremen (DE); ROESLER, Burkard, 27337 Blender (DE)
(74) Vertreter: Aulich, Martin
(86) Internationale Anmeldenummer: PCT/EP2007/002277
(87) Internationale Veröffentlichungsnummer: WO 2007/107284

(56) Entgegenhaltungen:
- EP-A1- 0 210 544
- EP-A1- 0 963 912
- WO-A1-00/17053
- DE-A1- 19 902 453
- GB-A- 926 776
- US-A- 1 647 265
- US-A- 2 942 757
- US-A- 3 448 846
- US-A- 4 059 940
- US-A- 4 367 618
- US-A- 4 607 477

## Beschreibung

Die vorliegende Erfindung betrifft eine Vorrichtung zum Fördern von Zigaretten-Gruppen oder anderen Gegenständen in bzw. im Zusammenhang mit einer Verpackungsmaschine von einer Aufnahmestation zu einer Abgabestation, mit einem Taschenförderer - Taschenkette - zur Aufnahme je einer Zigaretten-Gruppe, die in einem Bereich einer Förderstrecke taktweise, insbesondere im Bereich der Aufnahmestation, und im Bereich einer anderen Teilförderstrecke durch einen kontinuierlich umlaufenden Revolver angetrieben ist, wobei der Taschenförderer, im Bereich der Abgabestation am Umfang des Revolvers anliegt mit längs des Umfangs angeordneten Revolvertaschen zur Aufnahme der Zigaretten-Gruppen durch achsparallele Verschiebung während des Gleichlaufs von Revolver und Taschenförderer, und wobei auf den Taschenförderer ein die Bewegungsdifferenzen zwischen kontinuierlichem und taktweisem Antrieb ausgleichender, überlagerter Ausgleichsantrieb übertragbar ist. Die Erfindung betrifft des Weiteren eine Vorrichtung sowie ein Verfahren zum Fördern von Zigaretten-Gruppen oder anderen Gegenständen in bzw. im Zusammenhang mit einer Verpackungsmaschine mit einer Überführungseinrichtung zur translatorischen Überführung der Gegenstände aus einer Anfangsposition in eine Endposition.

Es wird von der EP 0 210 544 als gattungsbildendem Stand der Technik ausgegangen.

Der Transport von jeweils dem Inhalt einer Zigaretten-Packung entsprechenden Zigaretten-Gruppen in Zusammenhang mit der Verpackung derselben bildet ein besonderes Problem. Einerseits sollen die Zigaretten-Gruppen ohne Beeinträchtigung bei hoher Geschwindigkeit transportiert werden. Andererseits soll das Förderorgan exakte Relativstellungen für den Einschub der Zigaretten-Gruppen in bzw. aus Taschen des Förderers gewährleisten.

Die Aufgabe der vorliegenden Erfindung besteht darin, die eingangs genannten Vorrichtungen als Teil einer Verpackungsmaschine bzw. das eingangs genannte Verfahren zu verbessern.

Diese Aufgabe wird gelöst durch eine Vorrichtung mit den Merkmalen des Anspruches 1.

Danach ist die eingangs genannte Vorrichtung zum Fördern von Zigaretten-Gruppen oder anderen Gegenständen von einer Aufnahmestation zu einer Abgabestation dadurch gekennzeichnet, dass der Ausgleichsantrieb ein taktweise zumindest annähernd in Umfangsrichtung des Revolvers Hin- und/oder Herbewegungen ausführendes, den Taschenförderer entlang einer gekrümmten Umlenkbahn führendes Umlenkmittel einer Umlenkvorrichtung ist, wobei der Taschenförderer in dem Bereich, in dem er an dem Umfang des Revolvers anliegt, mit der von dem Revolver abgewandten Seite an dem Hin- und/oder Herbewegungen ausführenden Umlenkmittel anliegt.

Vorteilhafterweise wird der Taschenförderer somit im Vergleich zum Stand der Technik in demjenigen Bereich, in dem er an dem Umfang des Revolvers anliegt, in Radialrichtung durch den Ausgleichsantrieb, d.h. das Umlenkmittel, gestützt bzw. gehalten. Es besteht daher kein Risiko, dass sich die radialen Lagen der Taschen des Taschenförderers gegenüber dem Revolver während des Gleichlaufs von Revolver und Taschenförderer verändern. Die erfindungsgemäße Positionierung und Ausbildung des Umlenkmittels ermöglicht dabei eine besonders platzsparende Anordnung von Revolver, Taschenförderer und Umlenkmittel bzw. Ausgleichsantrieb. Der Taschenförderer kann bei einem Revolver mit vertikaler Drehebene problemlos auch in einem vertikalen, seitlichen Bereich an dem Revolverumfang anliegen, ohne dass zu befürchten steht, dass der Taschenförderer schwerkraftbedingt in Radialrichtung aus der optimalen Anlageposition verrutscht.

Im Gegensatz dazu liegt der Taschenförderer bei der EP 0 210 544 unten an dem Revolver an, wobei separate Andrückrollen vorgesehen sein müssen, die den Taschenförderer spannen und dafür Sorge tragen müssen, dass der Taschenförderer in dem Anlagebereich trotz insbesondere schwerkraftbedingter Kräfte an dem Revolver gehalten wird. Das erfindungsgemäße Umlenkmittel erfüllt gleichzeitig die Funktion des Ausgleichsantriebs sowie die Funktion der Andrückrollen.

Die Umlenkung von entlang einer Zugmittelführungsbahn umlaufenden Zugmitteln, wie etwa des vorgenannten Taschenförderers, allgemein von Ketten, Zahnriemen oder dergleichen, wirft besondere Probleme auf. Ein derartiges Zugmittel passt sich während der Umlenkung im Gegensatz zu einem Riemen, Seil oder Band der von dem Umlenkmittel vorgegebenen Umlenkbahn, die Teil der gesamten Zugmittelführungsbahn ist, nicht optimal an. Dies ist bedingt durch die periodisch, insbesondere äquidistant beabstandeten Teilelemente des Zugmittels, beispielsweise durch die einzelnen Kettenglieder oder Zahnriemenzähne. Im Umlenkbereich weist ein derartiges Zugmittel aus Kettengliedern oder Zahnriemenzähnen bei einer gekrümmten Umlenkbahn eine Polygonform auf, nicht aber eine entsprechend der Umlenkbahn gekrümmte Form. Diese Polygonform verursacht den sogenannten Polygoneffekt.

Unter der Annahme konstanter Geschwindigkeit derjenigen Kettenglieder, die auf den Umlenkbereich zulaufen, d.h. der sogenannten einlaufenden Kettenglieder, kommt es aufgrund der Polygonform des innerhalb des Umlenkbereichs befindlichen Teilkettenstücks zu Geschwindigkeitsschwankungen derjenigen Kettenglieder, die den Umlenkbereich bereits verlassen haben, nämlich der sogenannten auslaufenden Kettenglieder. Die wechselnden Geschwindigkeiten bzw. Beschleunigungen der auslaufenden Kettenglieder verursachen dynamische Kräfte in der gesamten umlaufenden Kette, die quadratisch mit der Betriebsgeschwindigkeit zunehmen. Darüber hinaus regen sie die Kette zu Schwingungen an und/oder verändern die Gesamtlänge der Kette. Letzteres gilt zumindest dann, wenn Längenänderungen der Kette bauartbedingt möglich sind.

Die Betriebsgeschwindigkeit eines Getriebes mit einer derartigen Kette ist daher stark eingeschränkt. Speziell bei Verpackungsmaschinen für Zigaretten mit einem als Taschenkette ausgebildeten Taschenförderer wirkt sich der Polygoneffekt besonders negativ aus. Denn in dem Bereich der Aufnahmestation, in dem Zigaretten-Gruppen in die Taschenkette eingeschoben werden, führen Schwankungen der Gesamtlänge der Taschenkette dazu, dass die jeweiligen Zigaretten-Gruppen unmittelbar vor dem Einschieben in die Taschen der Taschenkette einen örtlichen Versatz zu den Taschen aufweisen. Dieser Versatz kann im Extremfall das exakte Einschieben der jeweiligen Zigaretten-Gruppe in die Tasche verhindern.

Gemäß einem eigenständigen Aspekt der Erfindung wird daher eine Vorrichtung zur Umlenkung, insbesondere als Teil einer Verpackungsmaschine, so ausgebildet, dass der Polygoneffekt vermindert oder sogar vollständig beseitigt wird. Dazu ist vorgesehen, dass das Umlenkmittel der Umlenkvorrichtung, das zur Reduzierung des Polygoneffekts derart ausgebildet ist, dass die Krümmung der Umlenkbahn örtlich variiert.

Im Stand der Technik ist nicht bekannt, zur Reduzierung des Polygoneffektes örtlich variierende Krümmungen der die Umlenkbahn vorgebenden Umlenkmittel einzusetzen. Umlenkmittel geben im allgemeinen Umlenkbahnen mit örtlich konstanter Krümmung vor, sodass die Umlenkbahn Teile eines Kreises beschreibt.

Diesem Aspekt der Erfindung liegt die Erkenntnis zugrunde, dass eine Abweichung von dieser Teilkreisform der bekannten Umlenkbahnen zur Reduzierung des Polygoneffektes ausgenutzt werden kann. Dies gilt in einer besonderen Ausführungsform insbesondere dann, wenn das Umlenkmittel derart ausgebildet ist, dass die Umlenkbahn mit örtlich variierender Krümmung eine Funktion sich tangential aneinander anschließender Krümmungsradien ist, wobei der räumliche Verlauf der Umlenkbahn derart gewählt ist, dass eine Mehrzahl von Vorschubbewegungen eines vor dem Umlenkbereich angeordneten Teilelementes - einlaufendes Teilelement - um Strecken bestimmter Längen, bei einem zugeordneten Teilelement nach dem Umlenkbereich - auslaufendes Teilelement - Vorschubbewegungen um Strecken jeweils identischer Längen bewirken. Durch Anpassung des räumlichen Verlaufs der Umlenkbahn in der vorgenannten Weise kann demnach erreicht werden, den Polygoneffekt deutlich zu reduzieren oder sogar zu beseitigen. Je größer die Anzahl von Vorschubbewegungen ist, bei denen die genannte Bedingung erfüllt ist, desto stärker wird der Polygoneffekt reduziert. Erfindungsgemäß soll die vorgenannte Bedingung für eine möglichst große Anzahl von Vorschubbewegungen erfüllt sein, vorzugsweise für sämtliche Vorschubbewegungen.

Besonders bevorzugt sollte die Anzahl unterschiedlicher Vorschubbewegungen des einlaufenden Teilelements, die zu Vorschubbewegungen des auslaufenden Teilelements mit jeweils identischen Streckenlängen führen, größer sein als bei einer angenommenen, örtlich konstanten Krümmung der Umlenkbahn. Dieser Vergleich gilt naturgemäß unter der Annahme, dass die angenommene Umlenkbahn mit örtlich konstanter Krümmung ansonsten die gleichen Anschlüsse aufweist an die außerhalb des Umlenkbahnbereichs angeordneten Bahnabschnitte der restlichen Zugmittelführungsbahn, entlang derer das Zugmittel außerhalb der Umlenkung geführt wird.

Eine deutliche Reduzierung des Polygoneffektes kann auch dann erreicht werden, wenn für eine Mehrzahl von vorgegebenen unterschiedlichen Vorschubbewegungen des einlaufenden Teilelements im Vergleich mit einer örtlich konstanten Krümmung der Umlenkbahn die jeweiligen Abweichungen der Streckenlängen der durch die Bewegungen des einlaufenden Teilelements bewirkten Vorschubbewegungen des auslaufenden Elementes von den jeweiligen vorgegebenen, unterschiedlichen Streckenlängen des einlaufenden Teilelements geringer sind. Bestimmt wird demnach für eine Mehrzahl von Vorschubbewegungen des einlaufenden Teilelements, wie groß die Abweichung ist zwischen der Streckenlänge, um die das einlaufende Teilelement bewegt wird und der Streckenlänge, um die - bedingt durch die Vorschubbewegung des einlaufenden Teilelements - das auslaufende Teilelement verschoben wird. Für eine Mehrzahl von Vorschubbewegungen des einlaufenden Teilelements soll diese Abweichung geringer sein als die Abweichung bei einer örtlich konstanten Krümmung. Auch dieser Vergleich gilt naturgemäß unter der Annahme, dass die angenommene Umlenkbahn mit örtlich konstanter Krümmung ansonsten die gleichen Anschlüsse aufweist an die außerhalb des Umlenkbahnbereichs angeordneten Bahnabschnitte der restlichen Zugmittelführungsbahn, entlang derer das Zugmittel außerhalb der Umlenkung geführt wird.

Von den für das Zugmittel für die gewünschte Umlenkung theoretisch möglichen Umlenkbahnen mit örtlich variierender Krümmung, bei denen die Krümmung jeder Umlenkbahn eine Funktion sich tangential aneinander anschließender Krümmungsradien ist, soll vorzugsweise diejenige ausgewählt sein, bei der die Länge des jeweils innerhalb des Umlenkbahnbereichs befindlichen Zugmittelteilstücks für eine besonders große Anzahl unterschiedlicher Stellungen des Zugmittels, vorzugsweise für eine maximale Anzahl von Stellungen, identisch ist. Wie der Fachmann erkennt, ist eine allgemeingültige örtliche Definition, welcher Teil einer gesamten Zugmittelführungsbahn Teil der Umlenkung ist und welcher Teil nicht mehr zur Umlenkung gehört, nicht für jede Zugmittelführungsbahn eindeutig möglich. Dies ist aber nur von sekundärer Bedeutung. Denn entscheidend ist, dass zumindest für einen der sinnvoll definierbaren Umlenkbahnbereiche die vorgenannten Bedingungen erfüllbar sind. Bei einer 180°-Umlenkung mit geraden Anschlüssen kann der Umlenkbahnbereich beispielsweise festgelegt werden durch zwei feste Punkte der Zugmittelführungsbahn, nämlich bezogen auf die Vorschubrichtung des Zugmittels durch einen festen Punkt vor Beginn des gekrümmten Bahnabschnitt der Umlenkung und einen festen Punkt nach dem Ende des gekrümmten Bahnabschnitts der Umlenkung. Zur Erfüllung der vorgenannten Randbedingung muss das innerhalb dieses fest definierten Umlenkbahnbereichs befindliche Teilstück des Zugmittels dann für verschiedene Stellungen des Zugmittels die gleiche Länge innerhalb dieses Umlenkbahnberelchs aufweisen.

In einem weiteren eigenständigen Aspekt der vorliegenden Erfindung ist eine derartige, den Polygoneffekt reduzierende oder diesen idealerweise sogar beseitigende Umlenkvorrichtung Teil einer oben beschriebenen Vorrichtung zum Fördern von Zigaretten-Gruppen oder anderen Gegenständen in bzw. im Zusammenhang mit einer Verpackungsmaschine von einer Aufnahmestation zu einer Abgabestation, insbesondere mit einem kontinuierlich umlaufenden Falt-Revolver, mit einem Taschenförderer - Teschenkette - zur Aufnahme je einer Zigaretten-Gruppe, die in einem Bereich einer Förderstrecke taktweise, insbesondere im Bereich der Aufnahmestation und im Bereich einer anderen Teilförderstrecke, kontinuierlich angetrieben ist, wobei der Taschenförderer entlang zumindest einer Umlenkvorrichtung mit zur Reduzierung des Polygoneffekts ausgebildetem Umlenkmittel der vorgenannten Art geführt wird.

Ein Verfahren zum Fördern von Zigaretten-Gruppen oder anderen Gegenständen in bzw. im Zusammenhang mit einer Verpackungsmaschine, wobei die Gegenstände mittels einer Überführungseinrichtung translatorisch aus einer Anfangsposition in eine Endposition überführt werden, und wobei die Überführungseinrichtung ein Überführteil aufweist, das die Gegenstände aus der Anfangsposition in die Endposition stößt oder schiebt, ist dadurch gekennzeichnet, dass die Überführungseinrichtung über einen rotatorischen Servomotor sowie ein Getriebe verfügt, das Bewegungen der Welle des Servomotors in der einen Drehrichtung in eine translatorische Bewegung des Überführteils in Vorwärtsrichtung übersetzt und Bewegungen der Welle in der entgegengesetzten Drehrichtung in eine translatorische Rückbewegung des Überführteils in die entgegengesetzte Richtung, wobei der

Servomotor derart gesteuert wird, dass sich die Servomotorwelle taktweise in der einen oder in der entgegengesetzten Richtung dreht, sodass das Überführteil taktweise entsprechende translatorische Vor- und/oder Rückbewegungen ausführt.

Eine entsprechende Vorrichtung zur Durchführung des Verfahrens weist die vorgenannte Überführungseinrichtung auf zur translatorischen Überführung der Gegenstände aus der Anfangsposition in die Endposition und ist gekennzeichnet durch den rotatorischen Servomotor sowie das mit der Welle des Servomotors wirkverbundene Getriebe, mit dem die Rotationsbewegung der Servomotorwelle in die translatorische Bewegung des die Gegenstände aus der Anfangsposition translatorisch in die Endposition überführenden, insbesondere stoßenden oder schiebenden, Überführteils übersetzbar ist.

Die erfindungsgemäße Überführungseinrichtung verzichtet auf den Einsatz aufwendiger Getriebe, die die Drehbewegung einer Welle in ein und derselben Richtung in eine Hin- und/oder Herbewegung des Überführteils übersetzen. Durch den Einsatz des rotatorischen Servomotors, mit dem gezielt Drehungen der Antriebswelle in entgegengesetzte Richtungen möglich sind, kann das eingesetzte Getriebe eine wartungsarme, verschleißarme und vergleichsweise verschmutzungsunanfällige Grundstruktur aufweisen.

Vorzugsweise sind das Antriebsglied des Getriebes mit der Servomotorwelle wirkverbunden und drehbar und das Abtriebsglied des Getriebes mit dem Überführteil wirkverbunden und translatorisch vor- und/oder rückbewegbar, insbesondere in einer horizontalen Ebene.

In einer analytischen Reduktion des Getriebes auf eine kinematische Kette ist das Getriebe bevorzugt ein Viergelenk-Getriebe.

Was das Überführteil betrifft, so weist es vorzugsweise ein oder mehrere fingerartige Schieber oder Einstößer auf, mit denen die Gegenstände aus der Anfangsposition in die Endposition schiebbar oder stoßbar sind.

Weitere Merkmale der vorliegenden Erfindung ergeben sich aus den beigefügten Ansprüchen, aus der nachfolgenden Beschreibung bevorzugter Ausführungsbeispiele sowie aus den anliegenden Zeichnungen. In den Zeichnungen zeigt:
- Fig. 1: eine Vorrichtung zum Fördern von Zigaretten-Gruppen als Teil einer Verpackungsmaschine in Seitenansicht,
- Fig. 2: einen Teilausschnitt der Vorrichtung aus Fig. 1 in Seitenansicht bei vergrößertem Maßstab,
- Fig. 3: einen Teilausschnitt der Einzelheit der Fig. 2,
- Fig. 4: eine Schnittdarstellung entlang der Schnittebene IV - IV in Fig. 3, insbesondere einer Überführungseinrichtung für Zigaretten-Gruppen,
- Fig. 5: eine Umlenkbahn eines Flachriemens in Draufsicht,
- Fig. 6: ein Diagramm eines idealen Bewegungsablaufes des Flachriemens,
- Fig. 7: eine Darstellung einer Kettenumlenkung in Draufsicht gemäß dem Stand der Technik,
- Fig. 8: ein Diagramm des Bewegungsablaufes der Kette in Fig. 7,
- Fig. 9: eine Draufsicht auf eine Kette mit erfindungsgemäßer Umlenkung,
- Fig. 10: ein Diagramm des Bewegungsablaufes der Kette in Fig. 9,
- Fig. 11: die Kette aus Fig. 9 in einer anderen Stellung,
- Fig. 12: das Diagramm aus Fig. 10 mit weiteren Einzelheiten,
- Fig. 13: eine besondere Ausführungsform einer erfindungsgemäßen Umlenkvorrichtung,

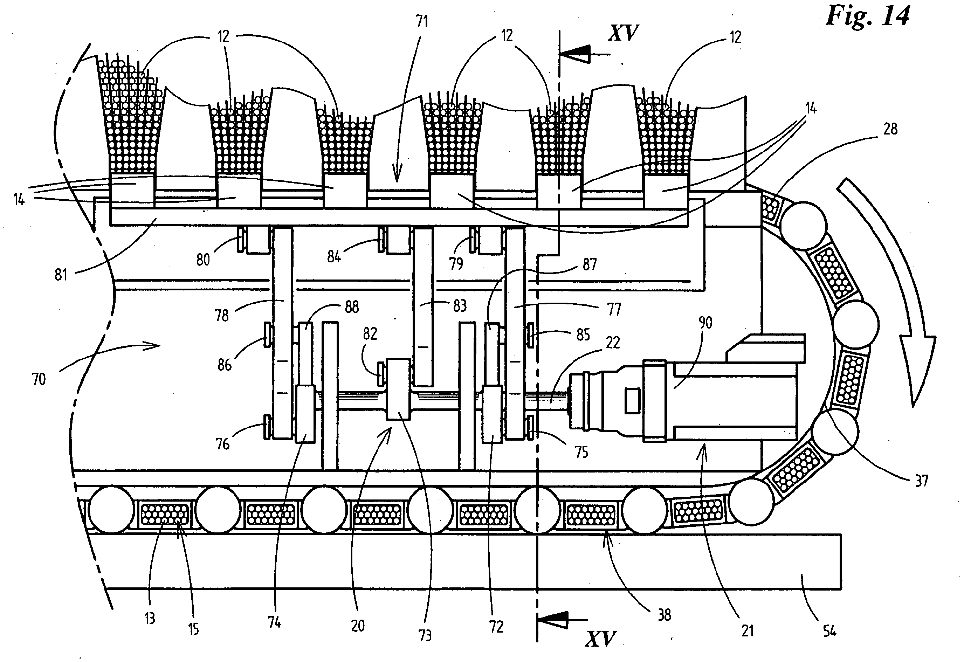

- Fig. 14: einen Teilausschnitt der Fig. 2 in Seitenansicht in vergrößerter Darstellung,

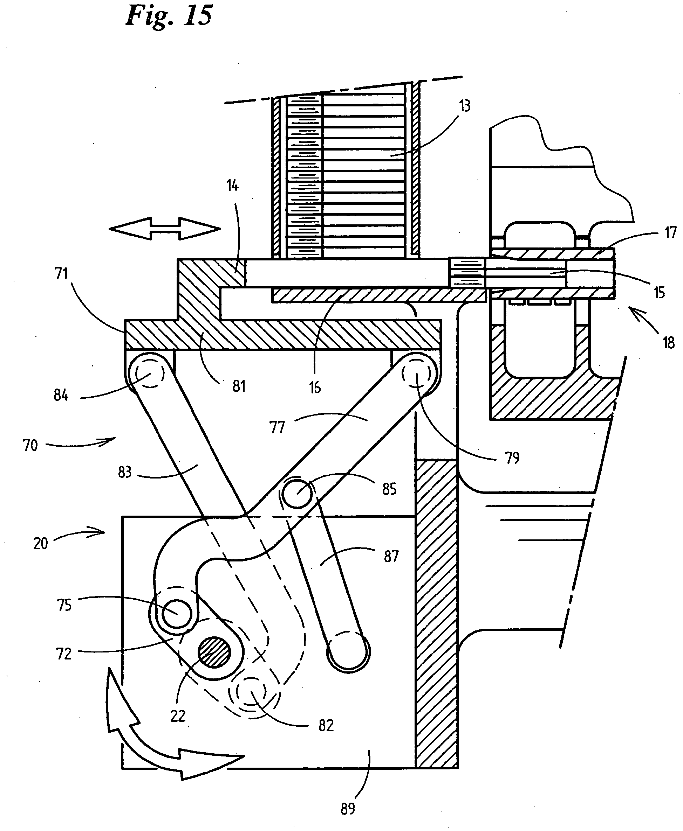

- Fig. 15: eine weitere Schnittdarstellung entlang der Schnittebene IV - IV in Fig. 3 mit gegenüber der Fig. 4 veränderter Stellung der Überführungseinrichtung.

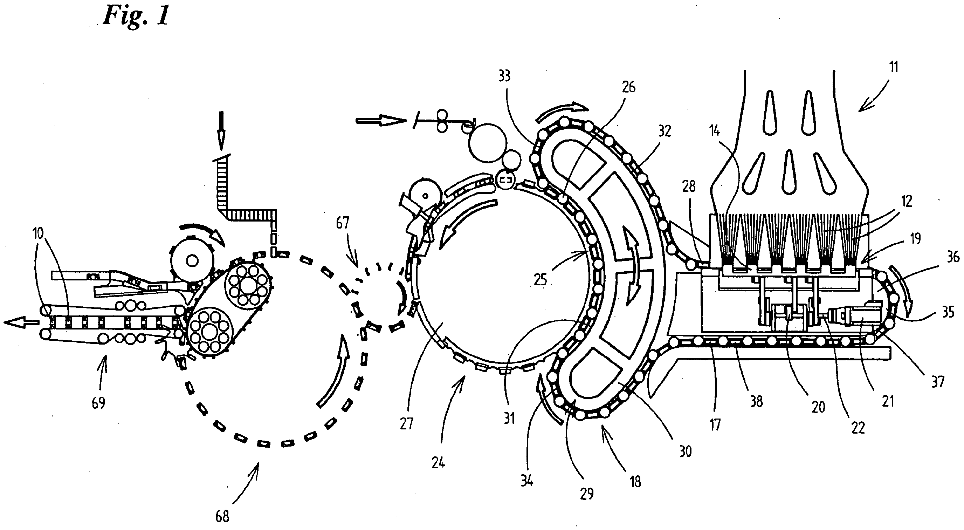

Fig. 1 zeigt die Fertigung von quaderförmigen Packungen 10, nämlich Zigarettenpackungen des Typs Weichbecher, in einer Packmaschine. Diese Zigarettenpackungen 10 dienen zur Aufnahme von Zigaretten-Gruppen 15 von Zigaretten 13, die in einer nicht dargestellten Fertigungseinheit produziert werden und von der Fertigungseinheit kommend einem Zigarettenmagazin 11 der Packmaschine zugeführt werden. Das Zigarettenmagazin 11 weist sechs Ausschubbereiche für einzelne Zigaretten-Gruppen 15 auf. Jeder Ausschubbereich verfügt über Schachtgruppen 12, die jeweils aus mehreren zusammengeführten Schächten gebildet sind. In jedem Schacht befindet sich in üblicher Weise eine Reihe von übereinander liegenden Zigaretten 13. Im unteren Bereich der Schachtgruppen 12 werden die Zigaretten-Gruppen 15 durch Schieber 14 einer Überführungseinrichtung 70 aus einer Anfangsposition in eine Endposition überführt, nämlich aus jeder Schachtgruppe 12 jeweils ausgeschoben und über eine horizontal verlaufende Führungsplatte 16 im Bereich einer Aufnahmestation 19 in Taschen 17 eines als Taschen-Förderer - Taschenkette 18 - ausgebildeten, umlaufenden Endlos-Zugmittels geschoben.

Die Zigaretten-Gruppen 15 als Packungsinhalt werden von der Taschenkette 18 anschließend an einen Falt-Revolver 24 übergeben. Dieser fertigt die Packungen 10 und übergibt sie einem Übergaberevolver 67, der die Packungen 10 zum Stabilisieren von Leimverbindungen an einen Trockenrevolver 68 weiterleitet. Die fertigen Packungen 10 werden schließlich über einen Abförderer 69 abtransportiert.

In besonderer Weise ist die Überführungseinrichtung 70 ausgebildet. Mit dieser Überführungseinrichtung 70 werden die Zigaretten-Gruppen 15 aus einer Anfangsposition in den Schachtgruppen 12 in eine Endposition innerhalb der Taschen 17 der Taschenkette 18 verschoben. Dazu weist die Überführungseinrichtung 70 ein Überführteil 71 mit sechs Schiebern 14 auf. Das Überführteil 71 verfügt über ein horizontal verlaufendes, plattenförmiges Basisteil 81, das mit den oberhalb des Basisteils 81, parallel zu diesem verlaufenden Schiebern 14 verbunden ist. Die Schieber 14 sind als fingerartige Elemente ausgebildet mit einer vorderen, insbesondere vertikal verlaufenden Schiebefläche, mit der die Zigaretten-Gruppen 15 während des Schiebevorgangs beaufschlagt werden bzw. an der die Zigaretten-Gruppen 15 dabei anliegen. Das Überführteil 71 und damit die Schieber 14 der Schachtgruppen 12 des Magazins 11 führen translatorische bzw. lineare, nämlich horizontale Hin- und/oder Herbewegungen aus.

Diese Hin- und/oder Herbewegungen des Überführteils 71 bzw. der Schieber 14 des Überführteils 71 werden über ein Getriebe 20, nämlich ein Kurbelgetriebe bewirkt. Das Getriebe 20 ist mit der Welle 22 eines rotatorischen Servomotors 21 wirkverbunden. Das Getriebe 20 ist derart ausgebildet, dass die Rotationsbewegungen der von dem Servomotor 21 angetriebenen Welle 22 in translatorische Bewegungen des Überführteils 71 umgewandelt werden. Das Überführteil 71 übernimmt dabei die Funktion des Abtriebsglieds des Getriebes 20.

Rotationsbewegungen der Welle 22 in einer ersten Drehrichtung führen zu einer Bewegung des Überführteils 71 - und mithin der Schieber 14 - auf die Zigaretten-Gruppe 15 zu, d.h. in Vorwärtsrichtung. Eine Drehbewegung der Welle 22 in zu der ersten Drehrichtung entgegengesetzten Richtung führt zu einer Rückbewegung des Überführteils 71 bzw. der Schieber 14 von der Zigaretten-Gruppe 15 weg.

Das Getriebe 20 verfügt über drei identische, jeweils mit der Welle 22 drehfest verbundene Verbindungsteile 72, 73, 74. Diese Verbindungsteile 72, 73, 74 sind in Axialrichtung hintereinander mit Abstand zueinander angeordnet. Das Verbindungsteil 72 mit dem geringsten axialen Abstand zum Gehäuse 90 des Servomotors 21 wird im Folgenden als inneres Verbindungsteil bezeichnet, das Verbindungsteil 74 mit dem größten axialen Abstand wird als äußeres Verbindungsteil bezeichnet, das Verbindungsteil 73 mit mittlerem axialen Abstand wird als mittleres Verbindungsteil bezeichnet.

Das innere und das äußere Verbindungsteil 72, 74 erstrecken sich in dieselbe Radialrichtung, während sich das mittlere Verbindungsteil 73 in die dazu entgegengesetzte, d.h. um 180° versetzte Radialrichtung erstreckt.

Mit dem jeweils einen, nämlich dem unteren Ende des inneren Verbindungsteils 72 sowie dem unteren Ende des äußeren Verbindungsteils 74 sind jeweils über Drehgelenke 75 bzw. 76 vordere Getriebehebel 77, 78 verbunden. Die entgegengesetzten, nämlich oberen Enden der Getriebehebel 77, 78 wiederum sind über Drehgelenke 79, 80 mit der Unterseite des plattenförmigen Basisteils 81 des Überführteils 71 verbunden. Dabei sind diese oberen Enden der Getriebehebel 77, 78 im vorderen Endbereich des plattenförmigen Basisteils 81 des Überführteils 71 angeordnet.

Mit dem einen, nämlich dem unteren Ende des mittleren Verbindungsteil 73 ist über ein Drehgelenk 82 ein hinterer Getriebehebel 83 verbunden. Das entgegengesetzte, nämlich obere Ende des Getriebehebels 83 ist über ein Drehgelenk 84 mit der Unterseite des plattenförmigen Basisteils 81 des Überführteils 71 verbunden. Dabei ist das obere Ende des Getriebehebels 83 im hinteren Endbereich des Basisteils 81 angeordnet.

Die Drehgelenke 75, 76, 82 sind an den Verbindungsteilen 72, 73, 74 jeweils mit radialem Abstand zur Welle 22 angeordnet, und zwar mit jeweils identischem Abstand.

Die beiden vorderen Getriebehebel 77, 78 sind jeweils über etwa auf deren halber Länge angeordnete Drehgelenke 85, 86 mit weiteren Getriebehebein 87, 88 verbunden, die über entsprechende Drehgelenke drehbar an einem ortsfesten Gehäuseteil 89 gelagert sind.

Die Längenverhältnisse sowie die Anordnung der einzelnen Glieder und Drehgelenke des Getriebes 20 sind insgesamt derart aufeinander abgestimmt, dass die Drehbewegung der Welle 22 in eine translatorische Bewegung des Überführteils 71 umgewandelt wird.

Während der Vorwärtsbewegung des Überführteils 71 treffen die Schiebeflächen der Schieber 14 des Überführteils 71 auf die Zigaretten-Gruppen 15 auf und verschieben diese in Richtung der Endpositionen in die Taschen 17 der Taschenkette 18. Dabei wird die Geschwindigkeit der Welle 22 des Servomotors 21 bevorzugt derart gesteuert, dass das Überführteil 71 bzw. die Schieber 14 zunächst mit möglichst geringer Geschwindigkeit auf die Zigaretten-Gruppen 15 auftreffen. Anschließend wird die Geschwindigkeit der Welle 22 erhöht, um die Zigaretten-Gruppe 15 möglichst schnell in die Endposition zu verschieben. Diese Geschwindigkeitssteuerung ist sinnvoll, um einerseits den Impulsübertrag auf die einzelnen Zigaretten beim Auftreffen der Schiebeflächen so klein wie möglich zu halten, sodass der Zigarettentabak so wenig wie möglich komprimiert wird. Andererseits wird durch die nachfolgende Beschleunigung eine möglichst hohe Taktgeschwindigkeit erzielt.

Insgesamt erfolgt mithin eine möglichst geführte Bewegung der Zigaretten-Gruppen 15. Natürlich liegt es auch im Rahmen der Erfindung, die Zigaretten-Gruppen 15 nicht in die Endposition zu schieben, sondern durch einen entsprechend großen Impulsübertrag dorthin zu stoßen.

Nach Beladung der Taschen 17 mit den Zigaretten-Gruppen 15 innerhalb der Aufnahmestation 19 transportiert die Taschenkette 18 die Zigaretten-Gruppen 15 zu einem rotierenden Revolver, nämlich einem Falt-Revolver 24. Ein Teilabschnitt der Taschenkette 18 liegt an dem Falt-Revolver 24 an. Genauer gesagt steht ein Teilabschnitt der Taschenkette 18 mit Teilbereichen des Umfangs des Revolvers 24 in formschlüssigem Eingriff, indem die einzelnen Taschen 17 miteinander verbindende Zahnstege 26 formschlüssig in Vertiefungen des Falt-Revolvers 24 eintreten, nämlich in Vertiefungen der Revolverscheibe 27. Durch die sich im Bereich der Anlage ergebende Verzahnung zwischen der Taschenkette 18 einerseits und der Revolverscheibe 27 andererseits wird die insbesondere kontinuierliche Drehbewegung des Falt-Revolvers 24 auf die Taschenkette 18 übertragen. Der Falt-Revolver 24 wirkt somit als Antrieb der Taschenkette 18.

Im Bereich des formschlüssigen Eingriffs der Zahnstege 26 der Taschenkette 18 in die Vertiefungen der Revolverscheibe 27 - Abgabestation 25 - werden die sich in den Taschen 17 der Taschenkette 18 befindenden Zigaretten-Gruppen 15 durch achsparallele Verschiebungen aus den Taschen 17 der Taschenkette 18 ausgestoßen bzw. ausgeschoben und nicht detailliert dargestellten Taschen des Falt-Revolvers 24 zugeführt.

In besonderer Weise ist die Bewegungscharakteristik der Taschenkette 18 ausgebildet. Die Taschenkette 18 wird entlang einer geschlossenen Zugmittelführungsbahn bzw. Taschenkettenführungsbahn in einer durch die Pfeile in Fig. 1 angegebenen Förderrichtung geführt. Im Bereich der Aufnahmestation 19, d. h. im Bereich des Obertrums 28 der Taschenkette 18 in Fig. 1, wird die Taschenkette 18 taktweise bewegt.

Für die Übergabe der Zigaretten-Gruppen 15, also für den Einschub derselben in die den Schachtgruppen 12 des Zigarettenmagazins 11 benachbarten Taschen 17, steht die Taschenkette 18 momentan still (Stillstandsphase). Dies ermöglicht den Einschub der Zigaretten-Gruppen 15 durch die Schieber 14 in die Taschen 17 der Taschenkette 18, und zwar quer zur Förderrichtung der Taschenkette 18. Im Bereich der Abgabestation 25 wiederum, d. h. im Bereich der Anlage der Taschenkette 18 an die Revolverscheibe 27, wird die Taschenkette 18 kontinuierlich bewegt durch die kontinuierliche Drehbewegung der Revolverscheibe 27. Insbesondere der Gleichlauf zwischen Revolverscheibe 27 und Taschenkette 18 in dem Bereich der Abgabestation 25 ermöglicht es, die Zigaretten-Gruppen 15 aus den Taschen 17 der Taschenkette 18 quer zur Förderrichtung in die Taschen des Falt-Revolvers 24 zu überführen.

Diese komplexe Bewegungscharakteristik wird bewirkt, indem dem konstanten bzw. kontinuierlichen, durch die Revolverscheibe 27 bewirkten Förderantrieb eine taktweise Ausgleichsbewegung überlagert ist. Die taktweise Ausgleichsbewegung erzeugt eine erste Umlenkvorrichtung 29, die ein Umlenkmittel 30 zum Umlenken der Taschenkette 18 aufweist. Das Umlenkmittel 30 führt taktweise Hin- und/oder Rückbewegungen aus, nämlich Auf- und/oder Abbewegungen in der Vertikalebene. Dazu ist das Umlenkmittel 30 in nicht dargestellter Weise mit einem geeigneten Antrieb verbunden.

Das Umlenkmittel 30 verfügt über gekrümmte, voneinander beabstandete, innere und äußere Führungsflächen 31 bzw. 32 zur Führung und/oder Anlage der Taschenkette 18. Die Führungsflächen 31, 32 verlaufen annähernd parallel zueinander und gehen endständig über in diese jeweils verbindende, ebenfalls gekrümmte obere bzw. untere Querführungsflächen 33, 34. Die Taschenkette 18 wird entlang der Führungsflächen 31 - 34 um das Umlenkmittel 30 herumgeführt, wobei die oberen und unteren Querführungsflächen 33, 34 für die Taschenkette jeweils annähernd 180°-Umlenkungen bilden.

Die Krümmungen der inneren und der äußeren Führungsflächen 31, 32 entsprechen der Krümmung der Revolverscheibe 27. Das Umlenkmittel 30 ist dabei derart angeordnet, dass die inneren und äußeren Führungsflächen 31, 32 parallel zum Umfang der Revolverscheibe 27 verlaufen. Dabei liegt die Taschenkette 18 in dem Bereich, in dem sie an dem Umfang des Falt-Revolvers 24 anliegt - Abgabestation 25 -, mit der von dem Falt-Revolver 24 abgewandten Seite an der gekrümmten inneren Führungsfläche 31 des Umlenkmittels 30 an.

Die taktweisen Hin- und/oder Rückbewegungen des Umlenkmittels 30, insbesondere der Querführungsflächen 33, 34, bewirken unter Mitnahme der Taschenkette 18 eine gleichgerichtete Bewegung der Taschenkette 18 entlang des Umfangs des Revolvers 24, die der kontinuierlichen Bewegung der Taschenkette 18 in Drehrichtung des Revolvers 24 überlagert ist. Durch die Hin- und/oder Rückbewegungen des Umlenkmittels 30 stehen in Umfangsrichtung des Revolvers 24, insbesondere der Revolverscheibe 27, je nach momentaner Bewegungsphase des Umlenkmittels 30 unterschiedliche Teilabschnitte des Revolvers 24, d.h. insbesondere der Revolverscheibe 27, in formschlüssigem Eingriff mit der Taschenkette 18.

Die Amplitude der Hin- und/oder Herbewegungen des Umlenkmittels 30 ist so abgestimmt, dass während eines Zyklusses aus Hin- und/oder Herbewegung eine (kurze) Stillstandsphase der Taschenkette 18 im Bereich der Aufnahmestation 19 gegeben ist.

In Förderrichtung stromabwärts der Aufnahmestation 19 ist eine zweite Umlenkvorrichtung 35 angeordnet. Diese zweite Umlenkvorrichtung 35 verfügt über ein Umlenkmittel 36 mit halbbogenartig gekrümmter Führungsfläche oder Führungskontur 37. Entlang der Führungsfläche 37 wird eine 180°-Umlenkung der Taschenkette 18 bewirkt. Der im Bereich der Aufnahmestation 19 horizontal verlaufende Obertrum 28 der Taschenkette 18 wird entlang der Führungsfläche 37 umgelenkt, so dass der Untertrum 38 zumindest bereichsweise in Horizontalrichtung antiparallel zum Obertrum 28 verläuft.

Besonders wichtig ist, dass die Führungsfläche 37 keine örtlich konstante, sondern eine örtlich variierende Krümmung aufweist, um den sogenannten Polygoneffekt zu reduzieren.

Dieser Polygoneffekt bewirkt bei Zugmitteln wie der Taschenkette 18 mit periodisch, insbesondere äquidistant beabstandeten Teilelementen - wie den Taschen 17, die voneinander durch die Zahnstege 26 äquidistant beabstandet sind - Geschwindigkeitsschwankungen der einzelnen Teilelemente nach der Umlenkung. Dies kann zu Schwankungen der Gesamtlänge der Taschenkette 18 führen. In dem Bereich der Aufnahmestation 19, in dem die Zigaretten-Gruppen 15 in die Taschenkette 18 eingeschoben werden, können diese Schwankungen der Gesamtlänge der Taschenkette 18 im Extremfall dazu führen, dass die jeweiligen Zigaretten-Gruppen 15 unmittelbar vor dem Einschieben in die Taschen 17 der Taschenkette 18 einen örtlichen Versatz zu den Taschen aufweisen. Dieser Versatz kann das exakte Einschieben der jeweiligen Zigaretten-Gruppe 15 in die Tasche 17 verhindern.

Diese Geschwindigkeits- bzw. Gesamtlängenschwankungen sind dadurch bedingt, dass derartige Zugmittel im Bereich einer Umlenkung der Krümmung der von einem Umlenkmittel vorgegebenen Umlenkbahn nicht ideal folgen können, sondern - zumindest in mathematischer Abstraktion - ein Polygon bilden.

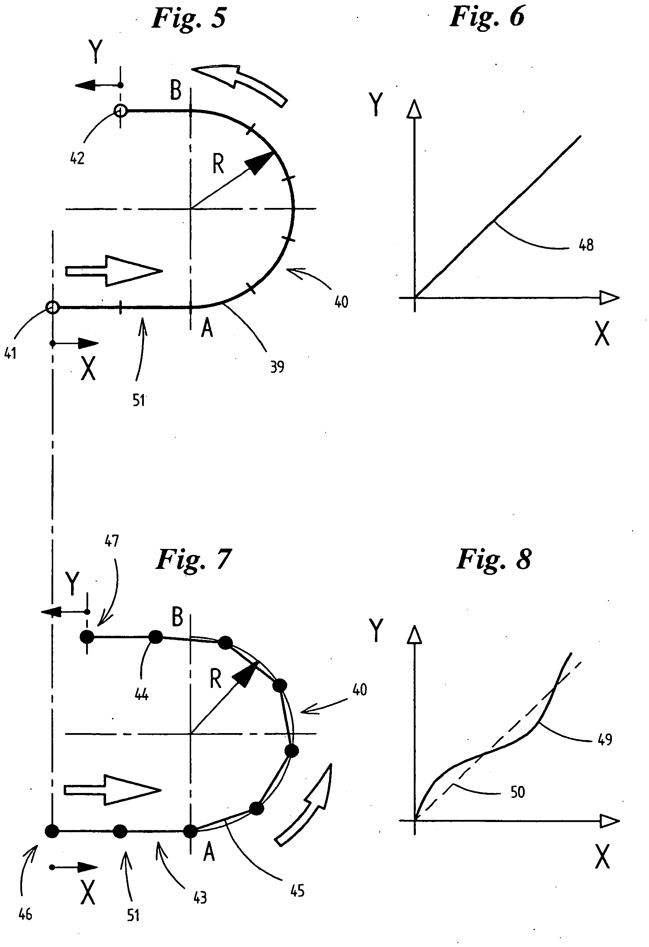

Nachfolgend werden die Zusammenhänge anhand der schematischen Darstellungen der Figuren 5 - 12 erläutert.

Fig. 5 zeigt eine 180°-Umlenkung eines als Flachriemen 39 ausgebildeten Zugmittels entlang einer gekrümmten Umlenkbahn 40, die Teil einer nur auszugsweise dargestellten, endlosen Zugmittelführungsbahn 51 ist, entlang der der Flachriemen 39 geführt wird. Im Folgenden wird als Umlenkbahn 40 der gekrümmte Bahnabschnitt zwischen den Punkten A und B definiert. Nach den Punkten A und B geht die Umlenkbahn 40 in gerade Anschlüsse der restlichen Zugmittelführungsbahn 51 über. Wie der Fachmann erkennt, kann die Umlenkbahn 40 auch anders gefasst werden, etwa indem noch Abschnitte der geraden Anschlüsse der Zugmittelführungsbahn 51 mit einbezogen werden.

Die Umlenkbahn 40 weist, wie dies im Stand der Technik üblich ist, eine örtlich konstante Krümmung auf, d.h. die Krümmung hat unabhängig vom Ort jeweils einen konstanten Wert. Die Krümmung kann demnach durch einen konstanten Krümmungsradius R beschrieben werden. Da der Flachriemen 39 naturgemäß keine periodisch beabstandeten Teilelemente aufweist, kann er sich in idealer Weise an die Umlenkbahn 40 anschmiegen. Dabei wird die Umlenkbahn durch ein nicht dargestelltes Umlenkmittel bewirkt bzw. vorgegeben, beispielsweise durch eine ortsfeste Umlenkkontur mit gekrümmten Umlenkflächen, entlang der der Flachriemen 39 geführt wird. Ein Polygoneffekt tritt nicht auf. Beliebige Vorschubbewegungen um eine Strecke der Länge X eines vor dem Umlenkbereich angeordneten, beliebigen Punktes 41 des Flachriemens 39 bewirken jeweils Vorschubbewegungen um Strecken identischer Längen eines zugeordneten Punktes 42 auf dem Flachriemen 39 nach dem Umlenkbereich.

Fig. 6 zeigt ein diese Situation beschreibendes Diagramm. Das Diagramm stellt ein kartesisches Koordinatensystem dar, in dem als Ordinate die jeweilige Streckenlänge der Vorschubbewegung des Punktes 42 nach dem Umlenkbereich und als Abszisse die Streckenlänge der Vorschubbewegung des Punktes 41 vor dem Umlenkbereich aufgetragen ist. Die in dem Koordinatensystem eingetragenen Werte beschreiben eine Gerade 48 mit der Steigerung 1, die im Ursprung beginnt. Jede Verschiebung des Punktes 41 um eine Streckenlänge X bewirkt demnach eine Verschiebung des Punktes 42 um eine identische Streckenlänge Y.

Fig. 7 zeigt anstelle eines Flachriemens 39 eine Kette 43 aus einzelnen Teilelementen, nämlich Kettengliedern 44, die miteinander unter äquidistanter Beabstandung durch gerade Zwischenstege 45 verbunden sind. Die Kette 43 wird entlang der Umlenkbahn 40 der Fig. 5 mit derselben, örtlich konstanten Krümmung geführt. In ähnlicher Weise, wie Fig. 6 die Bewegung eines Flachriemens beschreibt, beschreibt Fig. 8 nun die Bewegung der Kette 43 entlang der Umlenkbahn 40. Für ein einlaufendes Kettenglied 46 vor dem Umlenkbereich, nämlich vor dem Startpunkt A der Umlenkbahn 40, sind Vorschubbewegungen um verschiedene Streckenlängen X den durch diese Bewegungen bewirkten Vorschubbewegungen um Streckenlängen Y eines auslaufenden Kettengliedes 47 nach dem Umlenkbereich, d.h. nach dem Punkt B, gegenübergestellt. Die gestrichelte Gerade 50 in Fig. 8 stellt den idealen Bewegungsverlauf dar, wie er etwa von dem Flachriemen 39 bewirkt wird, wenn er ohne Polygoneffekt entlang der Umlenkbahn 40 geführt wird. Die durchgezogene Linie 49 zeigt dagegen den Bewegungsablauf der Gliederkette. Jede Bewegung um eine Strecke der Länge X des einlaufenden Kettengliedes 46 bewirkt unterschiedliche, nicht identische Vorschubbewegungen um Strecken der Länge Y des auslaufenden Kettengliedes 47. Die unterschiedlichen Streckenlängern Y werden durch den Polygoneffekt hervorgerufen, d.h. durch die von dem Krümmungsverlauf der Umlenkbahn 40 abweichende Polygonform der Kette 43 innerhalb des Umlenkbereichs.

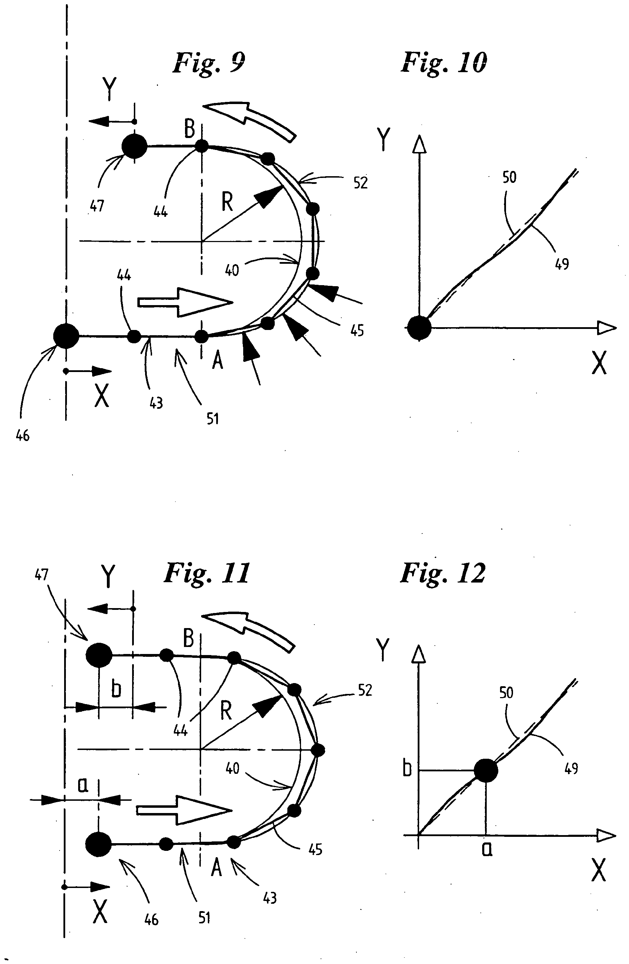

Wie in Fig. 9 dargestellt ist, ist nun erfindungsgemäß vorgesehen, die Kette 43 nicht entlang einer Umlenkbahn 40 mit konstanter Krümmung zu führen, sondern entlang einer Umlenkbahn 52 mit örtlich variabler Krümmung. Dies führt dazu, dass Vorschubbewegungen um Strecken bestimmter Länge X des einlaufenden Kettengliedes 46 im Vergleich zum Stand der Technik Vorschubbewegungen um Streckenlängen Y des auslaufenden Kettengliedes 47 bewirken, die identisch sind zu den Streckenlängen X oder zumindest in einem sehr engen Intervall um den identischen Wert liegen. Dementsprechend schmiegt sich die Kurve 49 des Bewegungsablaufes der Gliederkette in diesem Fall deutlich besser an den idealen Bewegungsverlauf 48 an, vgl. Fig. 10, als dies bei der Umlenkung mit konstantem Krümmungsradius gemäß Fig. 7, Fig. 8 der Fall ist.

Dabei ist eine entsprechende, die Umlenkbahn 52 bewirkende Umlenkvorrichtung, etwa die Umlenkvorrichtung 35 aus Fig. 1, derart ausgebildet, dass die Umlenkbahn 52 mit örtlich variierender Krümmung eine Funktion sich tangential aneinander anschließender Krümmungsradien ist, wobei der räumliche Verlauf der Umlenkbahn 52 derart gewählt ist, dass zumindest eine Mehrzahl von Vorschubbewegungen des vor dem Umlenkbereich angeordneten, einlaufenden Kettengliedes 46 um Strecken bestimmter Längen X bei dem zugeordneten auslaufenden Kettenglied 47 nach dem Umlenkbereich Vorschubbewegungen um Strecken Y jeweils identischer Längen bewirken. Durch Anpassung des räumlichen Verlaufs der Umlenkbahn 52 gegenüber der Umlenkbahn 40 mit örtlich konstanter Krümmung in der vorgenannten Weise kann demnach erreicht werden, den Polygoneffekt deutlich zu reduzieren oder sogar zu beseitigen.

Eine besonders gute Reduzierung des Polygoneffektes kann erreicht werden, wenn zumindest für eine Mehrzahl von vorgegebenen unterschiedlichen Vorschubbewegungen des einlaufenden Kettengliedes 46 um Streckenlängen X die Bedingung erfüllt ist, dass die jeweiligen Abweichungen der Streckenlängen Y der entsprechenden Vorschubbewegungen des auslaufenden Kettengliedes 47 von den jeweils vorgegebenen Streckenlängen X des einlaufenden Kettengliedes 46 geringer sind im Vergleich zu der Verwendung der Umlenkbahn 40 mit örtlich konstanter Krümmung. Bestimmt wird demnach für eine Mehrzahl von Vorschubbewegungen des einlaufenden Kettengliedes 46, wie groß die Abweichung ist zwischen der Streckenlänge X, um die das einlaufende Kettengliedes 46 bewegt wird und der Streckenlänge Y, um die - bedingt durch die Vorschubbewegung des einlaufenden Kettengliedes 46 - das auslaufende Kettengliedes 47 verschoben wird. Für eine Mehrzahl von Vorschubbewegungen des einlaufenden Kettengliedes 46 soll diese Abweichung geringer sein als die Abweichung bei der örtlich konstanten Krümmung der Umlenkbahn 40.

Wie ein Vergleich der Bewegungskurven 49 der Fig. 8 einerseits und der Fig. 10 bzw. 11 andererseits ergibt, wird die vorgenannte Bedingung durch die Umlenkbahn 52 erfüllt: Die Bewegungskurve 49 der Fig. 10 schmiegt sich deutlich enger an die ideale Bewegungskurve 48 an als die Bewegungskurve 49 der Fig. 8.

Weiter kann der Polygoneffekt reduziert werden, je größer die Anzahl von Vorschubbewegungen ist, bei denen die weiter oben bereits genannte Bedingung erfüllt ist, wonach die Umlenkbahn 52 mit örtlich variierender Krümmung eine Funktion sich tangential aneinander anschließender Krümmungsradien ist und der räumliche Verlauf der Umlenkbahn 52 derart gewählt ist, dass zumindest eine Mehrzahl von Vorschubbewegungen des einlaufenden Kettengliedes 46 um Strecken bestimmter Längen X bei dem zugeordneten auslaufenden Kettenglied 47 Vorschubbewegungen um Strecken Y jeweils identischer Längen bewirken. Erfindungsgemäß sollte diese Bedingung für eine möglichst große Anzahl von Vorschubbewegungen erfüllt sein, vorzugsweise für sämtliche Vorschubbewegungen. Besonders bevorzugt kann diese Anzahl unterschiedlicher Vorschubbewegungen um Streckenlängen X des einlaufenden Kettengliedes 46, die zu Vorschubbewegungen des auslaufenden Kettengliedes 47 mit jeweils identischen Streckenlängen Y führen, größer sein als dies bei der örtlich konstanten Krümmung der Umlenkbahn 40 der Fall ist.

In Fig. 11 und der zugeordneten Fig. 12 ist eine gegenüber der Fig. 9 veränderte Stellung der Kette 43 gezeigt nach einer Vorschubbewegung des einlaufenden Kettengliedes 46 um eine Strecke der Länge a. Diese Vorschubbewegung bewirkt eine Vorschubbewegung der Streckenlänge b des auslaufenden Kettengliedes 47. Die beiden Streckenlängen a und b sind identisch, wie in dem in Fig. 12 dargestellten Kurvenverlauf zu erkennen ist.

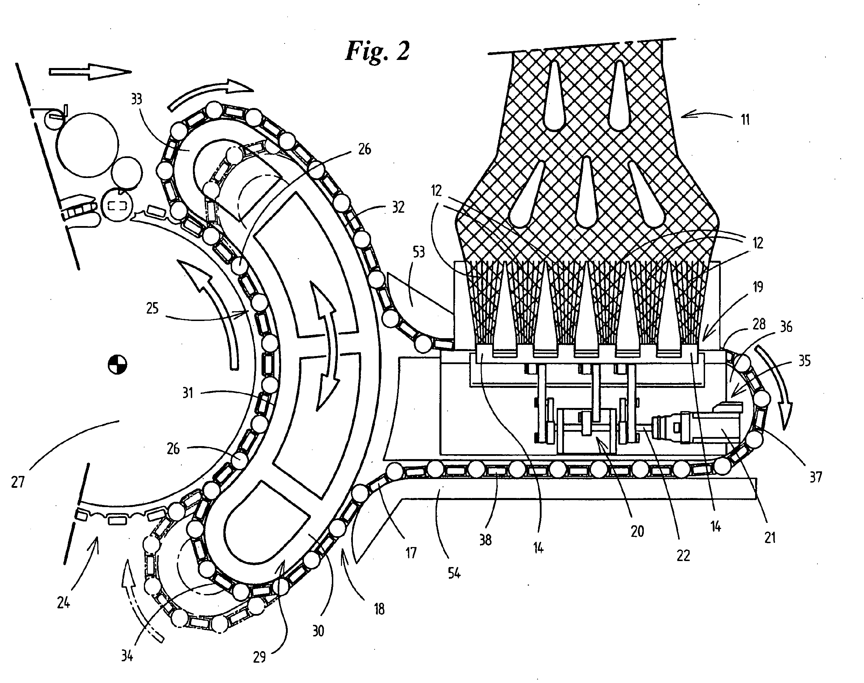

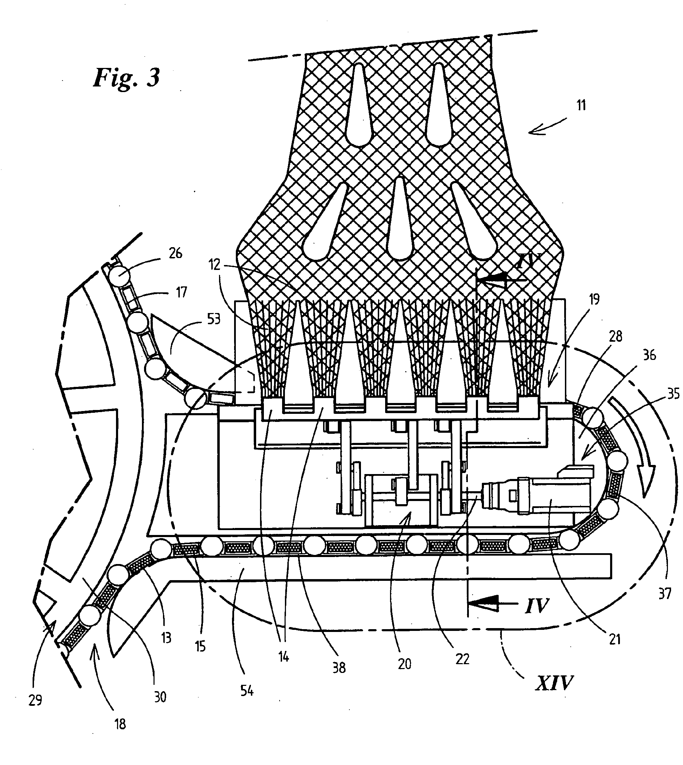

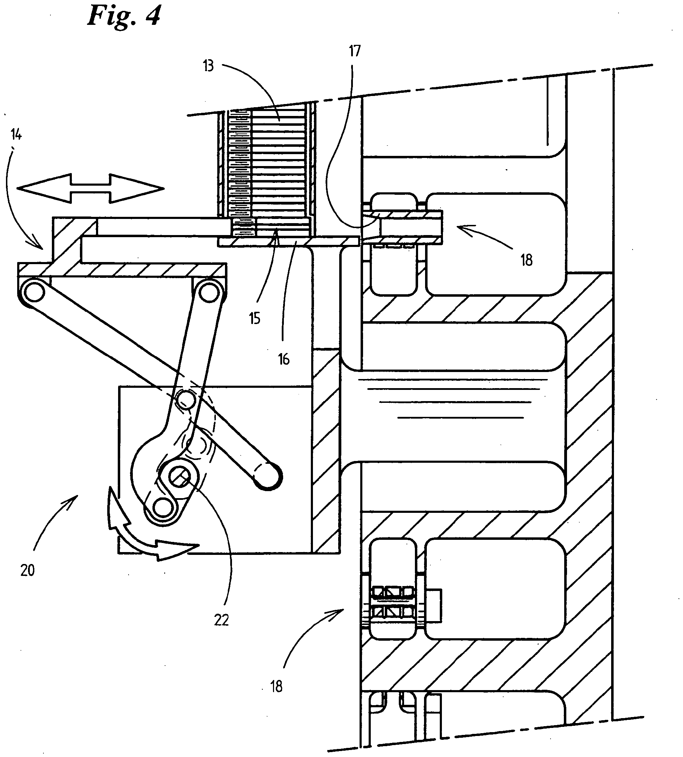

In ähnlicher Weise wie vorstehend im Zusammenhang mit den Fig. 9 - 12 erläutert, ist die Krümmung der Führungsfläche 37 des Umlenkmittels 36 der Verpackungsmaschine der Fig. 1 - 4 örtlich variierend ausgebildet, um den Polygoneffekt der umlaufenden Taschenkette 18 zu reduzieren. Die besondere Ausgestaltung der Führungsfläche 37 bewirkt im vorliegenden Fall bereits eine ausreichende Reduzierung des Polygoneffekts, die unter anderem dazu führt, dass die Gesamtlänge der Taschenkette 18 während des gesamten Umlaufs der Taschenkette 18 identisch ist. Erfindungsgemäß kann aber auch vorgesehen sein, beispielsweise die erste, Hin- und/oder Herbewegungen ausführende Umlenkvorrichtung 29 der Verpackungsmaschine derart auszubilden, dass Polygoneffekte reduziert werden. Dazu müssen eine oder mehrere der relevanten Führungsflächen bzw. Führungskonturen 31 - 34 des Umlenkmittels 30 geeignete, örtlich variierende Krümmungen aufweisen. Weiter können auch die gekrümmten Führungsflächen von Schienen 53, 54 der Verpackungsmaschine, durch die die Taschenkette 18 zunächst horizontal geführt und anschließend aus der Horizontalen nach oben bzw. unten abgelenkt wird, in erfindungsgemäßer Weise ausgebildet werden, um etwaige Polygoneffekte zu reduzieren.

Es ist denkbar, die örtlich variierenden Krümmungen von Umlenkbahnen mehrerer Umlenkvorrichtungen einer Anlage - wie der zuvor beschriebenen Verpackungsmaschine - derart aufeinander abzustimmen, dass sie gemeinsam den Gesamtpolygoneffekt der verschiedenen Umlenkungen bzw. Umlenkvorrichtungen kompensieren. Wie der Fachmann erkennt, sind hier verschiedenste Möglichkeiten denkbar.

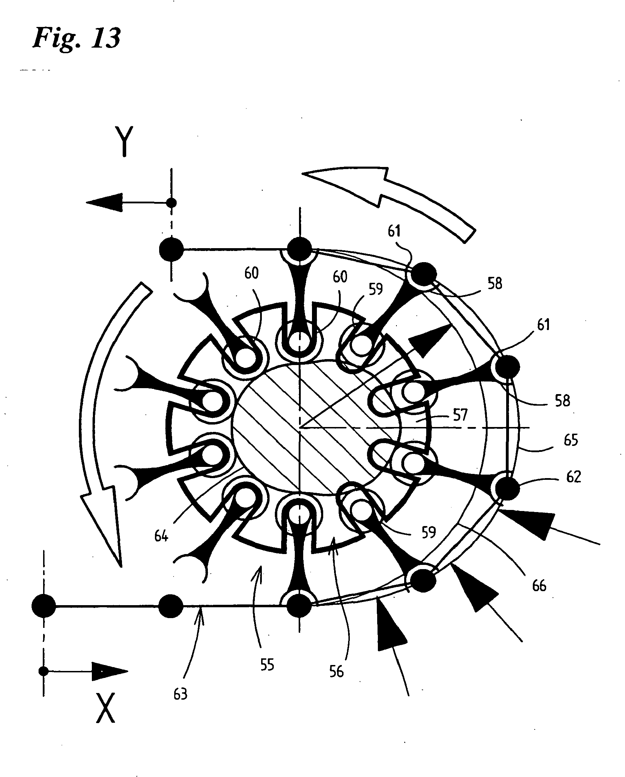

In Fig. 13 ist schließlich eine Alternativlösung zu den oben beschriebenen Umlenkvorrichtungen gezeigt, deren Umlenkmittel jeweils feste Führungsflächen oder Führungskonturen mit örtlich variierender Krümmung aufweisen. Die Umlenkvorrichtung 55 der Fig. 13 weist dagegen als Umlenkmittel 56 ein mittels eines nicht dargestellten Antriebes rotierbares Rad 57 auf mit über den Umfang des Rades verteilten, in Radialrichtung verschiebbaren Führungshebeln 58. Dazu sind die Führungshebel 58 verschiebbar in ebenfalls über den Umfang verteilten, radialgerichteten Nuten 59 des Rades 57 geführt. Die Führungshebel 58 ragen in Radialrichtung über den Umfang des Rades 57 hinaus. Endständig sind die Führungshebel 58 auf der dem Rad 57 zugewandten Seite mit Kurvenrollen 60 wirkverbunden. An der dem Rad 57 abgewandten Seite weisen die Führungshebel 58 endständig insbesondere konkave Aufnahmen 61 für die - temporäre - Führung von beispielsweise Gliedergelenken 62 einer Kette 63 auf. Die einzelnen Kurvenrollen 60 rollen während der Drehung des Rades 57 auf einer ortsfesten Führungsfläche, nämlich einer Kurvenkontur 64 ab. Durch das Abrollen der Kurvenrollen 60 auf der Kurvenkontur 64 führen die Führungshebel 58 überlagerte Translations- und Rotationsbewegungen aus. Die Kette 63 kann dementsprechend durch die Umlenkvorrichtung 55 entlang einer Umlenkbahn 65 geführt werden, deren Krümmung örtlich variiert. Zum Vergleich ist in der Fig. 13 noch eine Umlenkbahn 66 mit örtlich konstanter Krümmung dargestellt. Die Krümmungswerte der Umlenkbahn 65 können durch geeignete Dimensionierung der einzelnen Bauteile der Umlenkvorrichtung 55 vorgegeben werden.

### Bezugszeichenliste

- 10: Packung
- 11: Zigarettenmagazin
- 12: Schachtgruppe
- 13: Zigaretten
- 14: Schieber
- 15: Zigaretten-Gruppe
- 16: Führungsplatte
- 17: Tasche
- 18: Taschenkette
- 19: Aufnahmestation
- 20: Getriebe
- 21: Servomotor
- 22: Welle
- 24: Falt-Revolver
- 25: Abgabestation
- 26: Zahnsteg
- 27: Revolverscheibe
- 28: Obertrum
- 29: Umlenkvorrichtung
- 30: Umlenkmittel
- 31: Führungsfläche
- 32: Führungsfläche
- 33: Querführungsfläche
- 34: Querführungsfläche
- 35: zweite Umlenkvorrichtung
- 36: Umlenkmittel
- 37: Führungsfläche
- 38: Untertrum
- 39: Flachriemen
- 40: Umlenkbahn
- 41: Punkt auf Flachriemen
- 42: Punkt auf Flachriemen
- 43: Kette
- 44: Kettenglied
- 45: Zwischensteg
- 46: einlaufendes Kettenglied
- 47: auslaufendes Kettenglied
- 48: idealer Bewegungsablauf
- 49: durchgezogene Linie
- 50: gestrichelte Linie
- 51: Zugmittelführungsbahn
- 52: Umlenkbahn
- 53: Schiene
- 54: Schiene
- 55: Umlenkvorrichtung
- 56: Umlenkmittel
- 57: rotierendes Rad
- 58: Führungshebel
- 59: Nut
- 60: Kurvenrolle
- 61: konkave Aufnahme
- 62: Kettenglied
- 63: Kette
- 64: Kurvenkontur
- 65: Umlenkbahn
- 66: Umlenkbahn
- 67: Übergaberevolver
- 68: Trockenrevolver
- 69: Abförderer
- 70: Überführungseinrichtung
- 71: Überführteil
- 72: inneres Verbindungsteil
- 73: mittleres Verbindungsteil
- 74: äußeres Verbindungsteil
- 75: Drehgelenk
- 76: Drehgelenk

## Patentansprüche

1. Vorrichtung zum Fördern von Zigaretten-Gruppen (15) oder anderen Gegenständen in bzw. im Zusammenhang mit einer Verpackungsmaschine von einer Aufnahmestation (19) zu einer Abgabestation (25), mit einem Taschenförderer - Taschenkette (18) - zur Aufnahme je einer Zigaretten-Gruppe (15), die in einem Bereich einer Förderstrecke taktweise, insbesondere im Bereich der Aufnahmestation (19), und im Bereich einer anderen Teilförderstrecke durch einen kontinuierlich umlaufenden Revolver angetrieben ist, wobei der Taschenförderer (18) im Bereich der Abgabestation (25) am Umfang des Revolvers (24) anliegt mit längs des Umfangs angeordneten Revolvertaschen zur Aufnahme der Zigaretten-Gruppen (15) durch achsparallele Verschiebung während des Gleichlaufs von Revolver (24) und Taschenförderer (18) und wobei auf den Taschenförderer (18) ein die Bewegungsdifferenzen zwischen kontinuierlichem und taktweisem Antrieb ausgleichender, überlagerter Ausgleichsantrieb übertragbar ist, **dadurch gekennzeichnet, dass** der Ausgleichsantrieb ein taktweise zumindest annähernd in Umfangsrichtung des Revolvers Hin- und/oder Herbewegungen ausführendes, den Taschenförderer (18) entlang einer gekrümmten Umlenkbahn führendes Umlenkmittel (30) einer Umlenkvorrichtung (29) ist, wobei der Taschenförderer (18) in dem Bereich, in dem er an dem Umfang des Revolvers (24) anliegt, mit der von dem Revolver (24) abgewandten Seite an dem Hin- und/oder Herbewegungen ausführenden Umlenkmittel (30) anliegt.

2. Vorrichtung gemäß Anspruch 1, **dadurch gekennzeichnet, dass** der Taschenförderer (18) mit dem Umfang des Revolvers (24) in formschlüssigem Eingriff steht, insbesondere über Zahnstege (26) von Taschen (17), die formschlüssig in Vertiefungen des Revolvers (24), insbesondere der Revolverscheibe (27), eintreten.

3. Vorrichtung gemäß einem oder mehreren der Ansprüche 1 oder 2, **dadurch gekennzeichnet, dass** der Taschenförderer (18) in dem Bereich, in dem er an dem Umfang des Revolvers (24) anliegt, insbesondere mit dem Revolver (24) in formschlüssigem Eingriff steht, mit der von dem Revolver (24) abgewandten Seite an dem Hin- und/oder Herbewegungen, insbesondere Auf- und/oder Abbewegungen, ausführenden Umlenkmittel (30) anliegt.

4. Vorrichtung gemäß einem oder mehreren der vorhergehenden Ansprüche, **dadurch gekennzeichnet, dass** ein dem Revolver (24) zugeordneter Teilabschnitt des Taschenförderers (18) mit konstanter Geschwindigkeit und ein der Aufnahmestation (19) zugeordneter Obertrum (28) oder Untertrum (38) taktweise, nämlich mit einer Stillstandsphase, bewegbar ist.

5. Vorrichtung gemäß einem oder mehreren der vorhergehenden Ansprüche, **dadurch gekennzeichnet, dass** der sich taktweise bewegende Obertrum (28) oder Untertrum (38) des Taschenförderers (18) während einer Auf- und/oder Abbewegung des Umlenkmittels (30) eine Stillstandsphase erfährt.

6. Vorrichtung gemäß einem oder mehreren der vorhergehenden Ansprüche, **dadurch gekennzeichnet, dass** das Umlenkmittel der Umlenkvorrichtung (29, 35) zur Reduzierung des Polygoneffektes derart ausgebildet ist, dass die Krümmung der Umlenkbahn (52, 65) örtlich variiert.

7. Vorrichtung gemäß einem oder mehreren der vorhergehenden Ansprüche, **dadurch gekennzeichnet, dass** das Umlenkmittel (30, 36, 56) derart ausgebildet ist, dass die Umlenkbahn (52, 65) mit örtlich variierender Krümmung folgende Randbedingungen erfüllt:
a) die örtlich variierende Krümmung der Umlenkbahn (52, 65) ist eine Funktion sich tangential aneinander anschließender Krümmungsradien,
b) der räumliche Verlauf der Umlenkbahn (52, 65) ist derart gewählt, dass eine Mehrzahl von Vorschubbewegungen eines vor dem Umlenkbereich angeordneten Teilelementes - einlaufendes Teilelement - um Strecken bestimmter Längen, bei einem zugeordneten Teilelement nach dem Umlenkbereich - auslaufendes Teilelement - Vorschubbewegungen um Strecken jeweils identischer Längen bewirken.

8. Vorrichtung gemäß einem oder mehreren der vorhergehenden Ansprüche, **dadurch gekennzeichnet, dass** die Anzahl unterschiedlicher Vorschubbewegungen des einlaufenden Teilelementes, die zu Vorschubbewegungen des auslaufenden leitetementes mit jeweils identischen Streckenlängen führen, größer ist als bei einer örtlich konstanten Krümmung der Umlenkbahn (52, 65) und/oder dass für eine Mehrzahl von unterschiedlichen Vorschubbewegungen des einlaufenden Teilelements die jeweiligen Abweichungen der Streckenlängen der durch die Bewegungen des einlaufenden Teilelements bewirkten Vorschubbewegungen des auslaufenden Elementes von den jeweiligen unterschiedlichen Streckenlängen des einlaufenden Teilelements geringer sind als bei einer örtlich konstanten Krümmung der Umlenkbahn (52, 65).

9. Vorrichtung gemäß einem oder mehreren der vorhergehenden Ansprüche, **dadurch gekennzeichnet, dass** von den für das Zugmittel (18, 43, 63) für die gewünschte Umlenkung theoretisch möglichen Umlenkbahnen mit örtlich variierender Krümmung, bei denen die Krümmung jeder Umlenkbahn eine Funktion sich tangential aneinander anschließender Krümmungsradien ist, diejenige ausgewählt ist, bei der die Länge des jeweils innerhalb des Umlenkbahnbereichs befindlichen Zugmittelteilstücks für eine besonders große Anzahl unterschiedlicher Stellungen des Zugmittels, vorzugsweise für eine maximale Anzahl von Stellungen, identisch ist.

## Claims

1. Apparatus for conveying cigarette groups (15) or other articles in, or in conjunction with, a packaging machine, from a receiving station (19) to a discharging station (25), having a pocket conveyor - pocket chain (18) - for receiving in each case one cigarette group (15), which, in a region of a conveying route, in particular in the region of the receiving station (19), is driven cyclically and, in the region of another conveying sub-route, is driven by a continuously circulating turret, wherein the pocket conveyor (18), in the region of the discharging station (25), butts against the circumference of the turret (24), with circumferentially arranged turret pockets for receiving the cigarette groups (15) by axis-parallel displacement as the turret (24) and pocket conveyor (18) run synchronously, and wherein it is possible to transmit to the pocket conveyor (18) an accompanying compensating drive movement, which compensates for the differences in movement between continuous and cyclic driving, **characterized in that** the compensating drive is a deflecting means (30) of a deflecting apparatus (29), this deflecting means executing back and/or forth movements cyclically at least more or less in the circumferential direction of the turret and guiding the pocket conveyor (18) along a curved deflecting path, wherein the pocket conveyor (18), in the region in which it butts against the circumference of the turret (24), has the side which is directed away from the turret (24) butting against the deflecting means (30), which executes back and/or forth movements.

2. Apparatus according to Claim 1, **characterized in that** the pocket conveyor (18) is in form-fitting engagement with the circumference of the turret (24), in particular via tooth crosspieces (26) of pockets (17), which enter in a form-fitting manner into depressions of the turret (24), in particular of the turret plate (27).

3. Apparatus according to one or both of Claims 1 and 2, **characterized in that** the pocket conveyor (18), in the region in which it butts against the circumference of the turret (24), in particular is in form-fitting engagement with the turret (24), has the side which is directed away from the turret (24) butting against the deflecting means (30), which executes back and/or forth movements, in particular up and/or down movements.

4. Apparatus according to one or more of the preceding claims, **characterized in that** a portion of the pocket conveyor (18) which is assigned to the turret (24) can be moved at constant speed and an upper strand (28) or lower strand (38), said strand being assigned to the receiving station (19), can be moved cyclically, that is to say with the inclusion of a standstill phase.

5. Apparatus according to one or more of the preceding claims, **characterized in that** the cyclically moving upper strand (28) or lower strand (38) of the pocket conveyor (18) is at a standstill during an up and/or down movement of the deflecting means (30).

6. Apparatus according to one or more of the preceding claims, **characterized in that** the deflecting means of the deflecting apparatus (29, 35) is designed, for reducing the polygon effect, such that the curvature of the deflecting path (52, 65) varies locally.

7. Apparatus according to one or more of the preceding claims, **characterized in that** the deflecting means (30, 36, 56) is designed such that the deflecting path (52, 65), with locally varying curvature, fulfils the following boundary conditions:
a) the locally varying curvature of the deflecting path (52, 65) is a function of tangentially adjoining radii of curvature,
b) the three-dimensional variation in the deflecting path (52, 65) is selected such that a number of advancement movements by distances of certain lengths in a sub-element arranged upstream of the deflecting region - incoming sub-element - give rise to advancement movements by distances of identical length in each case in an associated sub-element downstream of the deflecting region - outgoing sub-element.

8. Apparatus according to one or more of the preceding claims, **characterized in that** the number of different advancement movements of the incoming sub-element which result in advancement movements of identical lengths in each case in the outgoing sub-element is greater than in the case of a locally constant curvature of the deflecting path (52, 65), and/or **in that**, for a number of different advancement movements of the incoming sub-element, the lengths of the advancement movements of the outgoing element which are brought about by the movements of the incoming sub-element deviate from the different lengths of the incoming sub-element in each case to a lesser extent than in the case of a locally constant curvature of the deflecting path (52, 65).

9. Apparatus according to one or more of the preceding claims, **characterized in that**, of the deflecting paths with locally varying curvature which are theoretically possible for the pulling means (18, 43, 63) for the desired deflection, the curvature of each deflecting path being a function of tangentially adjoining radii of curvature, the one selected is that for which the length of the pulling-means component located within the deflecting-path region in each case is identical for a particularly large number of different positions of the pulling means, preferably for a maximum number of positions.

## Revendications

1. Dispositif pour transporter des groupes de cigarettes (15) ou d'autres objets dans ou en relation avec une machine d'emballage depuis un poste de réception (19) jusqu'à un poste de distribution (25), comprenant un transporteur à poches - chaîne à poche (18) - pour recevoir un groupe de cigarettes respectif (15), qui est entraîné dans une région d'une section de transport de manière cadencée, en particulier dans la région du poste de réception (19), et dans la région d'une autre section de transport partielle par une tourelle tournant en continu, le transporteur à poches (18) s'appliquant dans la région du poste de distribution (25) contre la périphérie de la tourelle (24) avec des poches de tourelle disposées le long de la périphérie pour recevoir les groupes de cigarettes (15) par déplacement d'axe parallèle pendant le fonctionnement synchronisé de la tourelle (24) et du transporteur à poches (18), et un entraînement d'équilibrage superposé, équilibrant les différences de mouvement entre l'entraînement continu et l'entraînement cadencé pouvant être transmis au transporteur à poches (18), **caractérisé en ce que** l'entraînement d'équilibrage est un moyen déflecteur (30) d'un dispositif déflecteur (29), effectuant des mouvements de va-et-vient cadencés au moins approximativement dans la direction périphérique de la tourelle et guidant le transporteur à poches (18) le long d'une trajectoire périphérique courbe, le transporteur à poches (18), dans la région dans laquelle il s'applique contre la périphérie de la tourelle (24), s'appliquant par son côté opposé à la tourelle (24) contre le moyen déflecteur (30) effectuant des mouvements de va-et-vient cadencés.

2. Dispositif selon la revendication 1, **caractérisé en ce que** le transporteur à poches (18) est en prise par engagement par correspondance géométrique avec la périphérie de la tourelle (24), en particulier par le biais de nervures dentées (26) de poches (17) qui entrent par engagement par correspondance géométrique dans des renfoncements de la tourelle (24), notamment du plateau (27) de la tourelle.

3. Dispositif selon l'une quelconque ou plusieurs des revendications 1 et 2, **caractérisé en ce que** le transporteur à poches (18), dans la région dans laquelle il s'applique contre la périphérie de la tourelle (24), notamment dans laquelle il est en engagement par correspondance géométrique avec la tourelle (24), s'applique par son côté opposé à la tourelle (24) contre le moyen déflecteur (30) effectuant des mouvements de va-et-vient, en particulier des mouvements de levage et/ou d'abaissement.

4. Dispositif selon l'une quelconque ou plusieurs des revendications précédentes, **caractérisé en ce qu'**une portion partielle du transporteur à poches (18) associée à la tourelle (24) peut être déplacée avec une vitesse constante et un tronçon supérieur (28) ou un tronçon inférieur (38) associé au poste de réception (19) peut être déplacé de manière cadencée, à savoir avec une phase d'immobilisation.

5. Dispositif selon l'une quelconque ou plusieurs des revendications précédentes, **caractérisé en ce que** le tronçon supérieur (28) ou le tronçon inférieur (38) du transporteur à poches (18) se déplaçant de manière cadencée subit, pendant un mouvement de levage et/ou d'abaissement du moyen déflecteur (30), une phase d'immobilisation.

6. Dispositif selon l'une quelconque ou plusieurs des revendications précédentes, **caractérisé en ce que** le moyen déflecteur du dispositif déflecteur (29, 35) est réalisé pour réduire l'effet de polygonalité de telle sorte que la courbure de la trajectoire périphérique (52, 65) varie localement.

7. Dispositif selon l'une quelconque ou plusieurs des revendications précédentes, **caractérisé en ce que** le moyen déflecteur (30, 36, 56) est réalisé de telle sorte que la trajectoire périphérique (52, 65) de courbure variant localement satisfasse aux conditions marginales suivantes :
a) la courbure variant localement de la trajectoire périphérique (52, 65) est une fonction de rayons de courbure se raccordant tangentiellement les uns aux autres,
b) l'allure spatiale de la trajectoire périphérique (52, 65) est sélectionnée de telle sorte qu'une pluralité de mouvements d'avance d'un élément partiel disposé avant la région périphérique - élément partiel entrant - effectuent sur des distances de longueurs déterminées, pour un élément partiel associé après la région de déflexion - élément partiel sortant -, des mouvements d'avance sur des distances de longueurs respectivement identiques.

8. Dispositif selon l'une quelconque ou plusieurs des revendications précédentes, **caractérisé en ce que** le nombre de mouvements d'avance différents de l'élément partiel entrant, qui conduisent à des mouvements d'avance de l'élément partiel sortant avec des distances de longueurs identiques, est supérieur au nombre de mouvements dans le cas d'une courbure localement constante de la trajectoire périphérique (52, 65), et/ou **en ce que** pour une pluralité de mouvements d'avance différents de l'élément partiel entrant, les écarts respectifs des distances en longueur des mouvements d'avance de l'élément sortant provoqués par les mouvements de l'élément partiel entrant par rapport aux distances en longueur différentes respectives de l'élément partiel entrant sont inférieurs aux écarts dans le cas d'une courbure localement constante de la trajectoire périphérique (52, 65).

9. Dispositif selon l'une quelconque ou plusieurs des revendications précédentes, **caractérisé en ce que** parmi les trajectoires périphériques théoriquement possibles pour le moyen de traction (18, 43, 63) pour la déflexion souhaitée, avec une courbure variant localement, dans lesquelles la courbure de chaque trajectoire périphérique est une fonction de rayons de courbure se raccordant tangentiellement les uns aux autres, on choisit celle pour laquelle la longueur de la pièce partielle du moyen de traction se trouvant à chaque fois à l'intérieur de la région de la trajectoire périphérique est identique pour un nombre particulièrement grand de positions différentes du moyen de traction, de préférence pour un nombre maximal de positions.
